# EUROPEAN PATENT APPLICATION

(11) **EP 4 357 751 A1**
(43) Date of publication of application: **24.04.2024**
(21) Application number: 22903931.8
(22) Date of filing: 31.10.2022
(51) Int. Cl.: G01M 99/00, B26D 3/06, B26D 7/22

(54) **PRODUCTION MACHINE DIAGNOSING SYSTEM AND METHOD, BOX MAKING MACHINE, AND REMOTE MONITORING SYSTEM**

(30) Priority: 09.12.2021 JP 2021200419
(71) Applicant: Mitsubishi Heavy Industries Machinery Systems, Ltd., Kobe-shi, Hyogo 652-8585 (JP)
(72) Inventor: MORIMOTO, Satoshi, Kobe-shi, Hyogo 652-8585 (JP); SUZUKI, Yasunari, Kobe-shi, Hyogo 652-8585 (JP); YAMAMOTO, Kosuke, Kobe-shi, Hyogo 652-8585 (JP); NADACHI, Mitsuhiro, Kobe-shi, Hyogo 652-8585 (JP); AKITA, Kazuya, Kobe-shi, Hyogo 652-8585 (JP); OKAWA, Daisuke, Kobe-shi, Hyogo 652-8585 (JP); IORI, Shinya, Kobe-shi, Hyogo 652-8585 (JP)
(74) Representative: Hoffmann Eitle
(86) International application number: PCT/JP2022/040798
(87) International publication number: WO 2023/105999

(57) **Abstract**

This production machine diagnosing system and method, box making machine, and remote monitoring system include a data collecting unit for collecting operation data of a plurality of drive devices, and a diagnosing unit for detecting an abnormality on the basis of the operation data of the plurality of drive devices collected by the data collecting unit, wherein the diagnosing unit comprises: a first diagnosing unit which, when a first drive device among the plurality of drive devices, for driving an apparatus that conveys a sheet, is driven, detects an abnormality on the basis of the operation data of the first drive device; and a second diagnosing unit which, when a second drive device other than the first drive device, among the plurality of drive devices, is driven, detects an abnormality on the basis of the operation data of the second drive device.

## Description

### Technical Field

The present disclosure relates to a production machine diagnosing system and a method, a box making machine, and a remote monitoring system for monitoring and diagnosing an operation state of a production machine.

### Background Art

A box making machine, for example, manufactures a box object (corrugated cardboard box) by processing a sheet material (for example, a corrugated board). The box making machine includes a feeding unit, a printing unit, a slotter creaser unit, a die cutting unit, a folding unit, and a counter ejector unit. The box making machine is configured with multiple mechanical components and electrical components, and the mechanical components and the electrical components are driven by a drive device such as a drive motor, a blower, or an air cylinder. In addition, in the mechanical components and the electrical components, problems caused by deterioration or malfunction of the components and adjustment or maintenance failure of the machine may occur. Thus, a worker is required to perform periodic maintenance of the mechanical components and the electrical components.

In the automatic inspection device for a corrugated board in PTL 1 below, it is determined that a defect has occurred in a rotating body driven by a motor of which a drive current is determined to have exceeded a threshold value or in a threaded shaft within a movement range of the rotating body.

### Citation List

### Patent Literature

[PTL 1] Japanese Patent No. 5904663

### Summary of Invention

### Technical Problem

The box making machine is provided with, for example, multiple drive devices such as drive motors for driving the mechanical components and the electrical components. The multiple drive devices have different motor capacities, drive directions, disposition locations, drive times, manufacturing companies, and the like. Thus, it is difficult to monitor and diagnose operation states with high accuracy by simply monitoring only sizes of the drive currents of the drive devices.

An object of the present disclosure is to solve the above problems and to provide a production machine diagnosing system and a method, a box making machine, and a remote monitoring system that enable high-accuracy diagnosis by detecting a drive state of a drive device at an optimal timing.

### Solution to Problem

A production machine diagnosing system of the present disclosure for achieving the object includes a data collecting unit that collects operation data of a plurality of drive devices, and a diagnosing unit that detects an abnormality based on the operation data of the plurality of drive devices collected by the data collecting unit, in which the diagnosing unit includes a first diagnosing unit that detects an abnormality based on operation data of a first drive device which drives an apparatus which transfers a sheet among the plurality of drive devices in a case where the first drive device is driven, and a second diagnosing unit that detects an abnormality based on operation data of a second drive device other than the first drive device among the plurality of drive devices in a case where the second drive device is driven.

In addition, a production machine diagnosing method of the present disclosure includes a step of collecting operation data of a first drive device that drives an apparatus which transfers a sheet among a plurality of drive devices in a case where the first drive device is driven, a step of detecting an abnormality based on the operation data of the first drive device, a step of collecting operation data of a second drive device other than the first drive device among the plurality of drive devices in a case where the second drive device is driven, and a step of detecting an abnormality based on the operation data of the second drive device.

In addition, a box making machine of the present disclosure includes a feeding unit that feeds a carton-forming sheet material, a printing unit that performs printing on the carton-forming sheet material, a slotter creaser unit that performs creasing processing and grooving processing on a surface of the carton-forming sheet material, a folding unit that forms a box object by folding the carton-forming sheet material and bonding end portions, a counter ejector unit that piles the box objects while counting the number of box objects and then discharges the box objects for each predetermined number, and the production machine diagnosing system.

In addition, a remote monitoring system of the present disclosure includes the production machine diagnosing system, and a terminal device that is capable of accessing the production machine diagnosing system through a network.

### Advantageous Effects of Invention

According to the production machine diagnosing system of the present disclosure, high-accuracy diagnosis can be performed by detecting a drive state of a drive device at an optimal timing.

### Brief Description of Drawings

Fig. 1 is a schematic configuration diagram illustrating a box making machine of the present embodiment.
Fig. 2 is a schematic diagram illustrating a feeding unit.
Fig. 3 is a schematic diagram illustrating a printing unit.
Fig. 4 is a schematic diagram illustrating a slotter creaser unit.
Fig. 5 is a schematic diagram illustrating a die cutting unit.
Fig. 6 is a schematic diagram illustrating a folding unit.
Fig. 7 is a schematic diagram illustrating a counter ejector unit.
Fig. 8 is a schematic diagram illustrating a remote monitoring system including a diagnosing system for the box making machine of the present embodiment.
Fig. 9 is a flowchart illustrating a method of diagnosing the box making machine of the present embodiment.
Fig. 10 is a flowchart illustrating processing in a first diagnosis mode.
Fig. 11 is a flowchart illustrating processing in a second diagnosis mode.
Fig. 12 is a time chart illustrating processing in a third diagnosis mode.
Fig. 13 is a table illustrating an example of a diagnosis result in the first diagnosis mode.
Fig. 14 is a table illustrating an example of a diagnosis result in the second diagnosis mode.

### Description of Embodiments

Hereinafter, a preferred embodiment of the present disclosure will be described in detail with reference to the drawings. The present disclosure is not limited to the embodiment. In addition, in a case where there are a plurality of embodiments, the present disclosure also includes configurations obtained by combining each embodiment. In addition, constituents in the embodiment include constituents that are easily perceivable by those skilled in the art, constituents that are substantially the same, and constituents within a so-called range of equivalents.

### <Box Making Machine>

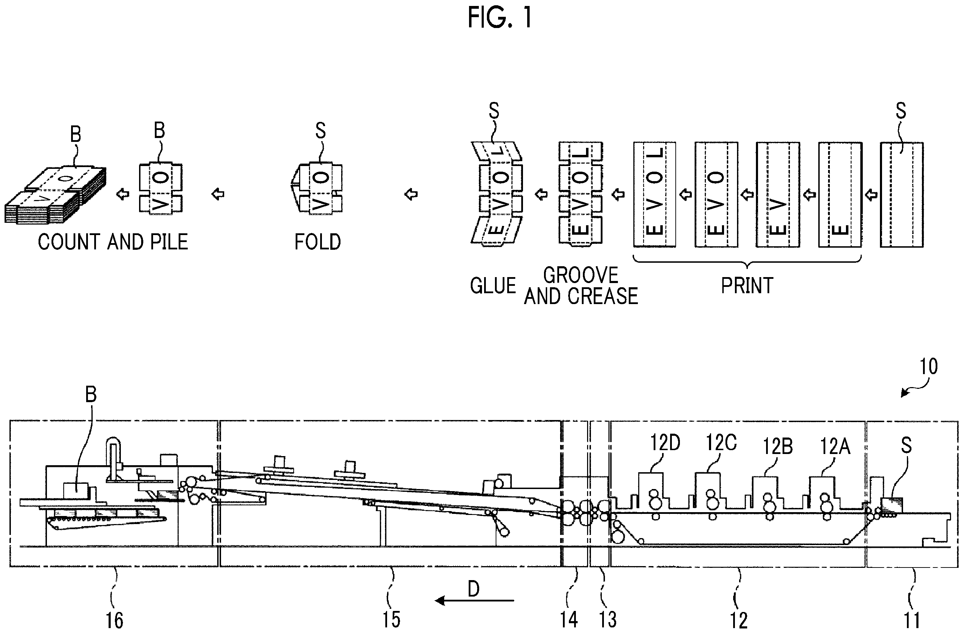

Fig. 1 is a schematic configuration diagram illustrating a box making machine of the present embodiment. The present embodiment will be described by applying the box making machine as a production machine.

As illustrated in Fig. 1, a box making machine 10 manufactures a corrugated cardboard box B by processing a corrugated board S. The box making machine 10 includes a feeding unit 11, a printing unit 12, a slotter creaser unit 13, a die cutting unit 14, a folding unit 15, and a counter ejector unit 16. The feeding unit 11, the printing unit 12, the slotter creaser unit 13, the die cutting unit 14, the folding unit 15, and the counter ejector unit 16 are linearly disposed along a transfer direction D in which the corrugated board S and the corrugated cardboard box B are transferred.

The corrugated boards S, each having a board shape, in a stacked state in multiple quantities are transferred into the feeding unit 11, and the feeding unit 11 ejects the corrugated boards S one board at a time to the printing unit 12 at a constant speed. The printing unit 12 performs multicolor printing (in the present embodiment, four-color printing) on a surface of the corrugated board S. In the printing unit 12, four printing units 12A, 12B, 12C, and 12D are disposed along the transfer direction D and perform printing on the surface of the corrugated board S using four types of ink colors. The slotter creaser unit 13 has a function of performing creasing processing, a function of performing cutting processing, and a function of performing grooving processing with respect to the corrugated board S.

The die cutting unit 14 performs punching processing of a hand hole and the like with respect to the corrugated board S. The folding unit 15 folds the corrugated board S while moving the corrugated board S in the transfer direction and bonds both end portions of the corrugated board S in a width direction to form the corrugated cardboard box B having a flat shape. The counter ejector unit 16 piles the corrugated cardboard boxes B manufactured by the folding unit 15 while counting the number of corrugated cardboard boxes B and then divides the corrugated cardboard boxes B into a batch of a predetermined number of corrugated cardboard boxes B and discharges the batch.

### <Feeding Unit>

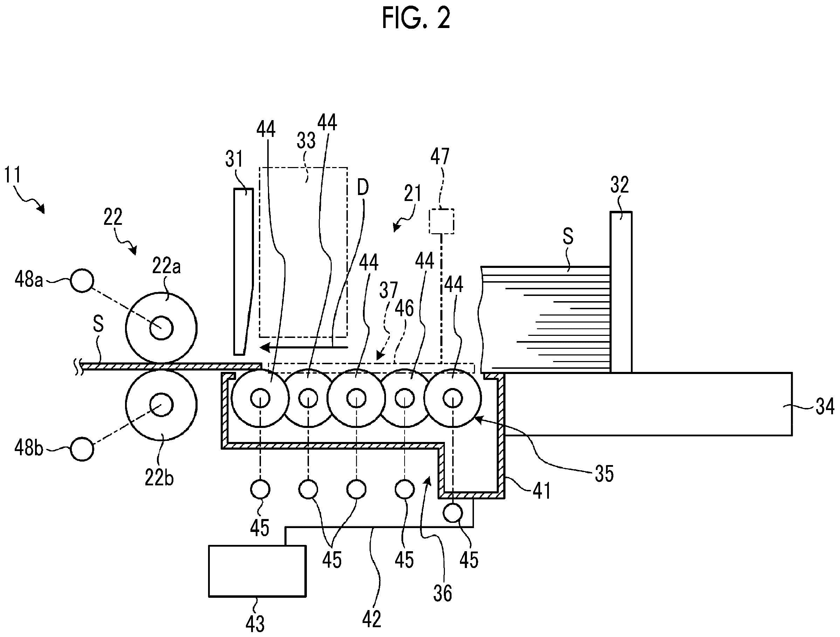

Fig. 2 is a schematic diagram illustrating the feeding unit.

The feeding unit 11 includes a transfer unit 21 and a feed roll 22. In the feeding unit 11, the feed roll 22 is disposed on a downstream side in the transfer direction D of the corrugated board S in the transfer unit 21.

The transfer unit 21 includes a front guide 31, a backstop 32, a side guide 33, a feed table 34, a wheel assembly 35, a suction section 36, and a grate device 37.

In the transfer unit 21, the front guide 31 is disposed on the downstream side, and the backstop 32 is disposed on the feed table 34 on an upstream side in the transfer direction D. The side guide 33 is disposed on both sides in the width direction orthogonal to the transfer direction D between the front guide 31 and the backstop 32. The feed table 34, the wheel assembly 35, and the suction section 36 are disposed between the left and right side guides 33 between the front guide 31 and the backstop 32.

A tip portion of the transferred corrugated board S abuts against the front guide 31. A rear end portion of the corrugated board S that has abutted against the front guide 31 abuts against the backstop 32. The corrugated board S falls onto the feed table 34 with its front end and end portion guided to the front guide 31 and the backstop 32. Accordingly, a position of the corrugated board S in the transfer direction D is aligned. At this point, the position of the corrugated board S in the width direction is aligned by the left and right side guides 33.

The suction section 36 includes a plurality of suction boxes 41. The plurality of suction boxes 41 are connected to a suction blower 43 through a duct 42. In a case where the suction blower 43 is driven, suction force acts on each suction box 41 through the duct 42. The wheel assembly 35 is disposed inside each suction box 41. The wheel assembly 35 accommodates a plurality of rows (in the present embodiment, five rows) of wheels 44 arranged along the transfer direction D. A drive motor 45 is connected to each wheel 44. In a case where the drive motor 45 is driven, the wheels 44 rotate in synchronization with each other.

The grate device 37 includes a grate 46. The grate 46 is disposed above the suction boxes 41 in the suction section 36 and above the wheels 44 in the wheel assembly 35. The grate 46 is a table having a grate shape in which a plurality of openings (not illustrated) are formed. The grate 46 can be lifted by a lifting device including a drive motor 47.

Thus, in a case where the drive motor 45 is driven, each of the wheels 44 of the wheel assembly 35 rotates in synchronization with each other. In a case where the suction blower 43 is driven, suction force acts on the suction boxes 41. In this state, in a case where the grate 46 is lowered, the wheels 44 come into contact with a lower surface of the corrugated board S that is positioned lowermost on the feed table 34. At this point, suction force acts on the lower surface of the corrugated board S, and frictional resistance between the corrugated board S and the wheels 44 is increased. Then, the corrugated board S is fed to the downstream side from a gap formed below the front guide 31 by the plurality of rotating wheels 44.

The feed roll 22 includes an upper feed roll 22a and a lower feed roll 22b. The feed roll 22 is disposed on the downstream side of the front guide 31 in the transfer direction D. Drive motors 48a and 48b are connected to the upper feed roll 22a and the lower feed roll 22b.

Thus, in a case where the drive motors 48a and 48b are driven, the upper feed roll 22a and the lower feed roll 22b rotate in synchronization with each other. Then, the corrugated board S fed from the transfer unit 21 is sandwiched between the upper feed roll 22a and the lower feed roll 22b from upper and lower sides and is fed toward the printing unit 12 (refer to Fig. 1) on the downstream side.

### <Printing Unit>

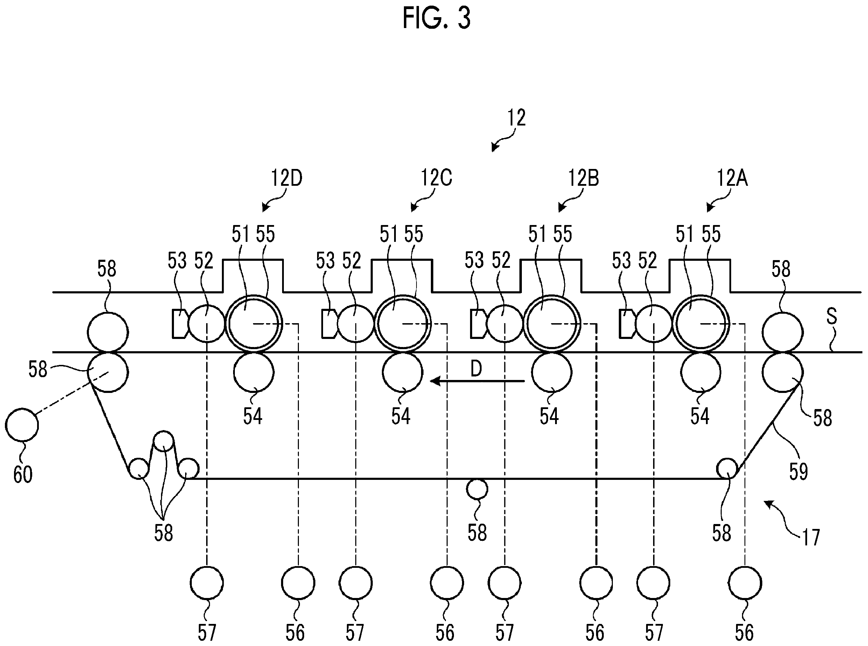

Fig. 3 is a schematic diagram illustrating the printing unit.

In the printing unit 12, the plurality (in the present embodiment, four) printing units 12A, 12B, 12C, and 12D are serially disposed along the transfer direction D and perform printing on the surface of the corrugated board S using different ink colors. Each of the printing units 12A, 12B, 12C, and 12D has almost the same configuration and includes a printing cylinder 51, an ink supply roll (anilox roll) 52, an ink supply section 53, and an impression roll 54. A printing die 55 can be mounted on an outer peripheral portion of the printing cylinder 51.

In the printing units 12A, 12B, 12C, and 12D, a drive motor 56 is connected to each printing cylinder 51, and a drive motor 57 is connected to each ink supply roll 52. In a case where the drive motors 56 and 57 are driven, the printing cylinders 51 and the ink supply rolls 52 rotate in synchronization with each other.

In addition, a transfer unit 17 is disposed in the printing unit 12. The transfer unit 17 transfers the corrugated board S in the transfer direction D in the printing unit 12. The transfer unit 17 includes a plurality of guide rollers 58 and an endless transfer belt 59. The plurality of guide rollers 58 are disposed in an inlet portion and an outlet portion of the printing unit 12 and are disposed below the printing unit 12. The transfer belt 59 is wound around the plurality of guide rollers 58. A drive motor 60 is connected to one guide roller 58. In a case where the drive motor 60 is driven, the transfer belt 59 is moved by the guide rollers 58.

Thus, in a case where the drive motors 56 and 57 are driven, the printing cylinders 51 and the ink supply rolls 52 rotate in synchronization with each other. Then, the corrugated board S fed from the feeding unit 11 is sandwiched between the printing cylinders 51 and the impression rolls 54 from the upper and lower sides and is fed toward the slotter creaser unit 13 on the downstream side. At this point, the ink supply sections 53 supply ink to the printing dies 55 of the printing cylinders 51 from the ink supply rolls 52. Then, in a case where the corrugated board S is transferred while being sandwiched between the printing cylinders 51 and the impression rolls 54, printing is performed by transferring the ink of the printing dies 55 of the printing cylinders 51 to the surface of the corrugated board S.

### <Slotter Creaser Unit>

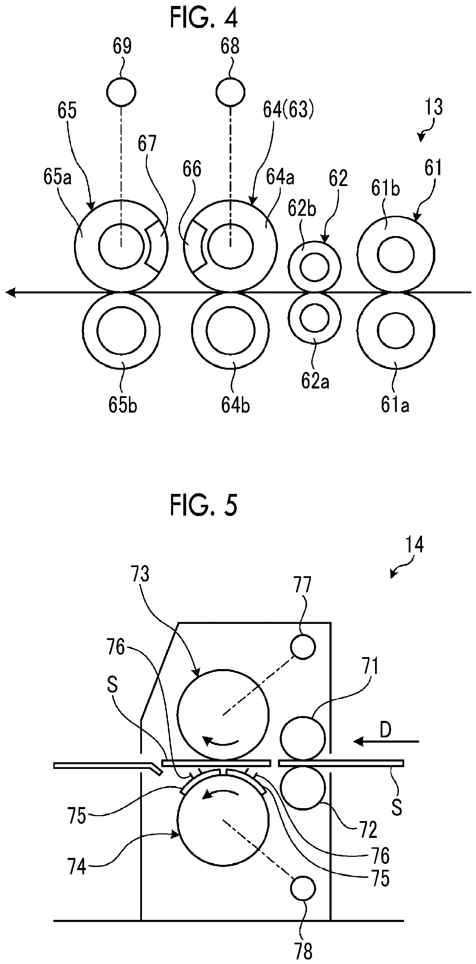

Fig. 4 is a schematic diagram illustrating the slotter creaser unit.

The slotter creaser unit 13 includes a first creasing roll 61, a second creasing roll 62, a slitter head 63, a first slotter head 64, and a second slotter head 65.

The first creasing roll 61 includes a creasing roll main body 61a and an impression roll 61b. The creasing roll main body 61a and the impression roll 61b have disk shapes, and a plurality of sets of the creasing roll main body 61a and the impression roll 61b are disposed at intervals in the width direction orthogonal to the transfer direction D of the corrugated board S. The second creasing roll 62 has a creasing roll main body 62a and an impression roll 62b. The creasing roll main body 62a and the impression roll 62b have disk shapes, and a plurality of sets of the creasing roll main body 62a and the impression roll 62b are disposed at intervals in the width direction of the corrugated board S. An outer diameter of the first creasing roll 61 is greater than an outer diameter of the second creasing roll 62.

Thus, in a case where the corrugated board S is transferred between the creasing roll main bodies 61a and the impression rolls 62b of the first creasing roll 61, the corrugated board S is sandwiched between outer peripheral portions of the creasing roll main bodies 61a and outer peripheral portions of the impression rolls 61b, and a creasing line is formed on the lower surface of the corrugated board S in a case where the corrugated board S passes between both of the creasing roll main bodies 61a and the impression rolls 61b. In addition, in a case where the corrugated board S is transferred between the creasing roll main bodies 62a and the impression rolls 62b of the second creasing roll 62, the corrugated board S is sandwiched between outer peripheral portions of the creasing roll main bodies 62a and outer peripheral portions of the impression rolls 62b, and a creasing line is formed again on the lower surface of the corrugated board S in a case where the corrugated board S passes between both of the creasing roll main bodies 62a and the impression rolls 62b. One creasing line is formed on the corrugated board S by forming the creasing line at the same position via the first creasing roll 61 and the second creasing roll 62.

The first slotter head 64 includes an upper slotter head 64a and a lower slotter head 64b. The upper slotter head 64a and the lower slotter head 64b have disk shapes, and four sets of the upper slotter head 64a and the lower slotter head 64b are disposed at predetermined intervals in the width direction of the corrugated board S. The first slotter heads 64 are provided to correspond to a predetermined position on the transferred corrugated board S in the width direction by the upper slotter heads 64a and the lower slotter heads 64b and perform grooving processing and gluing margin strip processing at the predetermined position on the corrugated board S.

The slitter head 63 includes an upper slitter knife and a lower slitter knife, not illustrated. The upper slitter knife and the lower slitter knife have disk shapes, and one set of the upper slitter knife and the lower slitter knife is disposed in end portions in a horizontal direction orthogonal to the transfer direction D of the corrugated board S. The slitter head 63 is provided to correspond to end portions of the transferred corrugated board S in the width direction by the upper slitter knife and the lower slitter knife and cuts the end portions of the corrugated board S in a width direction E.

In the first slotter heads 64, slotter knives 66 are mounted on outer peripheral portions of the upper slotter heads 64a. Three of the four first slotter heads 64 are used for the grooving processing of the corrugated board S, and one of the four first slotter heads 64 is used for the gluing margin strip processing of the corrugated board S.

The second slotter head 65 includes an upper slotter head 65a and a lower slotter head 65b. The upper slotter head 65a and the lower slotter head 65b have disk shapes, and four sets of the upper slotter head 65a and the lower slotter head 65b are disposed at predetermined intervals in the width direction of the corrugated board S. The second slotter heads 65 are provided to correspond to a predetermined position on the transferred corrugated board S in the width direction by the upper slotter heads 65a and the lower slotter heads 65b and perform the grooving processing and the gluing margin strip processing at the predetermined position on the corrugated board S.

In the second slotter heads 65, slotter knives 67 are mounted on outer peripheral portions of the upper slotter heads 65a. Three of the four second slotter heads 65 are used for the grooving processing of the corrugated board S, and one of the four second slotter heads 65 is used for the gluing margin strip processing of the corrugated board S.

A drive motor 68 is connected to the upper slotter heads 64a of the first slotter heads 64, and a drive motor 69 is connected to the upper slotter heads 65a of the second slotter heads 65. The drive motor 68 or the drive motor 69 are connected to each of the creasing roll main bodies 61a and 62a of the first creasing roll 61 and the second creasing roll 62 by a motive power transmission mechanism (for example, a gear mechanism), not illustrated. In a case where the drive motors 68 and 69 are driven, the upper slotter heads 64a, the upper slotter heads 65a, and the creasing roll main bodies 61a and 62a rotate in synchronization with each other.

Thus, in a case where the corrugated board S is transferred between the upper slitter knife a and the lower slitter knife of the slitter head 63, the corrugated board S is sandwiched between an outer peripheral portion of the upper slitter knife and an outer peripheral portion of the lower slitter knife, and the end portions of the corrugated board S are cut by the upper slitter knife and the lower slitter knife in a case where the corrugated board S passes between both of the upper slitter knife and the lower slitter knife. In addition, in a case where the corrugated board S is transferred between the upper slotter heads 64a and the lower slotter heads 64b of the first slotter heads 64, the corrugated board S is sandwiched between the outer peripheral portions of the upper slotter heads 64a and outer peripheral portions of the lower slotter heads 64b, and the corrugated board S is subjected to the grooving processing and the gluing margin strip processing by the slotter knives 66 in a case where the corrugated board S passes between both of the upper slotter heads 64a and the lower slotter heads 64b. Furthermore, in a case where the corrugated board S is transferred between the upper slotter heads 65a and the lower slotter heads 65b of the second slotter heads 65, the corrugated board S is sandwiched between the outer peripheral portions of the upper slotter heads 65a and outer peripheral portions of the lower slotter heads 65b, and the corrugated board S is subjected to the grooving processing and the gluing margin strip processing by the slotter knives 67 in a case where the corrugated board S passes between both of the upper slotter heads 65a and the lower slotter heads 65b.

### <Die Cutting Unit>

Fig. 5 is a schematic diagram illustrating the die cutting unit.

The die cutting unit 14 includes a pair of upper and lower pull collars 71 and 72, an anvil cylinder 73, and a knife cylinder 74. The pair of upper and lower pull collars 71 and 72 are disposed on the slotter creaser unit 13 side, and the anvil cylinder 73 and the knife cylinder 74 are disposed on the downstream side of the pull collars 71 and 72 in the transfer direction D. The pair of upper and lower pull collars 71 and 72 are disposed to face each other from the upper and lower sides and transfer the corrugated board S by sandwiching the corrugated board S from the upper and lower sides. The anvil cylinder 73 and the knife cylinder 74 are disposed to face each other from the upper and lower sides.

The knife cylinder 74 has a cylindrical shape and is provided with a knife object attachment base 75 on its outer peripheral surface. A cutting knife (knife object) 76 is attached to the knife object attachment base 75, and the knife object attachment base 75 is detachable from the outer peripheral surface of the knife cylinder 74. The cutting knife 76 performs the punching processing with respect to the corrugated board S. Drive motors 77 and 78 are connected to the anvil cylinder 73 and the knife cylinder 74. In a case where the drive motors 77 and 78 are driven, the anvil cylinder 73 and the knife cylinder 74 rotate in synchronization with each other.

Thus, in performing the punching processing with respect to the corrugated board S, the knife object attachment base 75 is mounted on the outer peripheral surface of the knife cylinder 74. In a case where the drive motors 77 and 78 are driven, the anvil cylinder 73 and the knife cylinder 74 rotate in synchronization with each other. Then, in a case where the corrugated board S fed from the slotter creaser unit 13 passes between the anvil cylinder 73 and the knife cylinder 74, the punching processing is performed on the corrugated board S by the cutting knife 76 of the knife object attachment base 75, and the corrugated board S is fed toward the folding unit 15 on the downstream side.

### <Folding Unit>

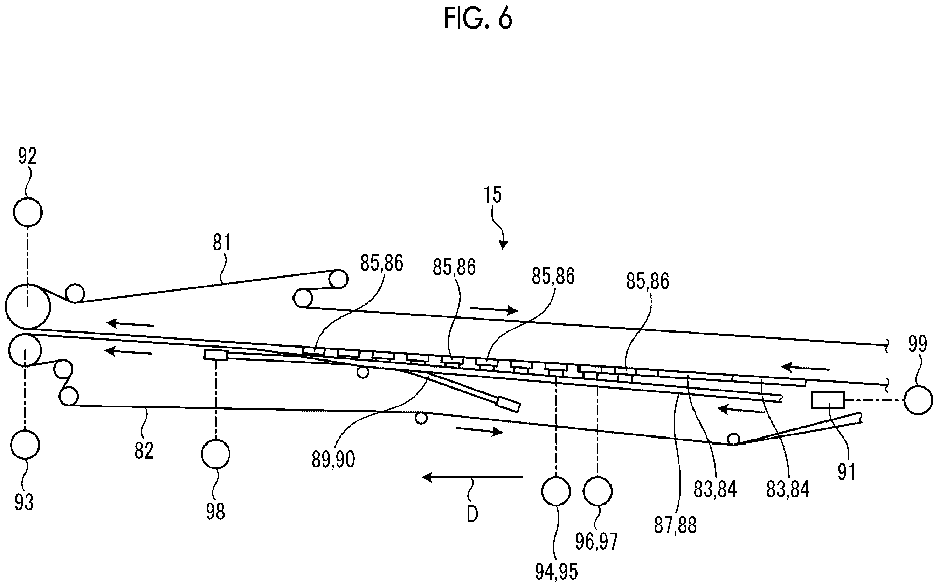

Fig. 6 is a schematic diagram illustrating the folding unit.

The folding unit 15 includes upper and lower transfer belts 81 and 82, left and right folding rails 83 and 84, left and right gauge rollers 85 and 86, left and right forming belts 87 and 88, left and right squaring bars 89 and 90, and a gluing device 91.

The upper transfer belt 81 and the lower transfer belt 82 transfer the corrugated board S and the corrugated cardboard box B by sandwiching the corrugated board S and the corrugated cardboard box B from the upper and lower sides. A plurality of the left and right folding rails 83 and 84 are serially disposed along the transfer direction and are disposed at positions in the width direction corresponding to the creasing line on the lower surface of the corrugated board S. The left and right folding rails 83 and 84 fold down sheet pieces on the end portion sides in the width direction at positions at which the creasing line of the corrugated board S abuts against folding portions. In the left and right folding rails 83 and 84, left and right guide plates, not illustrated, are serially disposed along the transfer direction D on the downstream side in the transfer direction D. The left and right gauge rollers 85 and 86 fold the corrugated board S, which is folded down at the position of the creasing line in each end portion in the width direction, inward while holding the corrugated board S at a folding position and transfer the corrugated board S. The left and right forming belts 87 and 88 are disposed at inclination to be twisted with respect to the transfer direction D so that both end portions of the corrugated board S in the width direction come into contact with an outer surface (upper surface) of each folded-down sheet piece. Thus, the corrugated board S is transferred while being supported by the left and right folding rails 83 and 84, the left and right guide plates, not illustrated, and the left and right gauge rollers 85 and 86. At this point, the left and right forming belts 87 and 88 sequentially fold the sheet pieces on the end portion sides in the width direction down and inward while pressing the sheet pieces.

The left and right squaring bars 89 and 90 are disposed to partially overlap with the forming belts 87 and 88 and with the gauge rollers 85 and 86 in the transfer direction D. The left and right squaring bars 89 and 90 are disposed to bring both end portions of the corrugated board S in the width direction into contact with the outer surface (upper surface) of each folded-down sheet piece, in the same manner as the forming belts 87 and 88. The gluing device 91 includes a glue wheel and performs gluing at a predetermined position on the corrugated board S.

Drive motors 92, 93, 94, 95, 96, 97, 98, and 99 are connected to the transfer belts 81 and 82, the gauge rollers 85 and 86, the forming belts 87 and 88, the squaring bars 89 and 90, and the gluing device 91, respectively. The drive motors 92, 93, 94, 95, 96, 97, 98, and 99 drive the transfer belts 81 and 82, the gauge rollers 85 and 86, the forming belts 87 and 88, the squaring bars 89 and 90, and the gluing device 91 in synchronization with each other.

Thus, in a case where the corrugated board S is transferred while being sandwiched between the transfer belts 81 and 82, the sheet pieces on the end portion sides in the width direction are sequentially folded down and inward while being pressed by the forming belts 87 and 88. At this point, the gauge rollers 85 and 86 fold the corrugated board S inward while holding the corrugated board S at the folding position and transfer the corrugated board S. In addition, the squaring bars 89 and 90 sequentially press the sheet pieces on the end portion sides of the corrugated board S in the width direction down and inward in cooperation with the forming belts 87 and 88. The gluing device 91 performs gluing on the end portion sides of the corrugated board S in the width direction. Accordingly, the corrugated cardboard box B is formed.

### <Counter Ejector Unit>

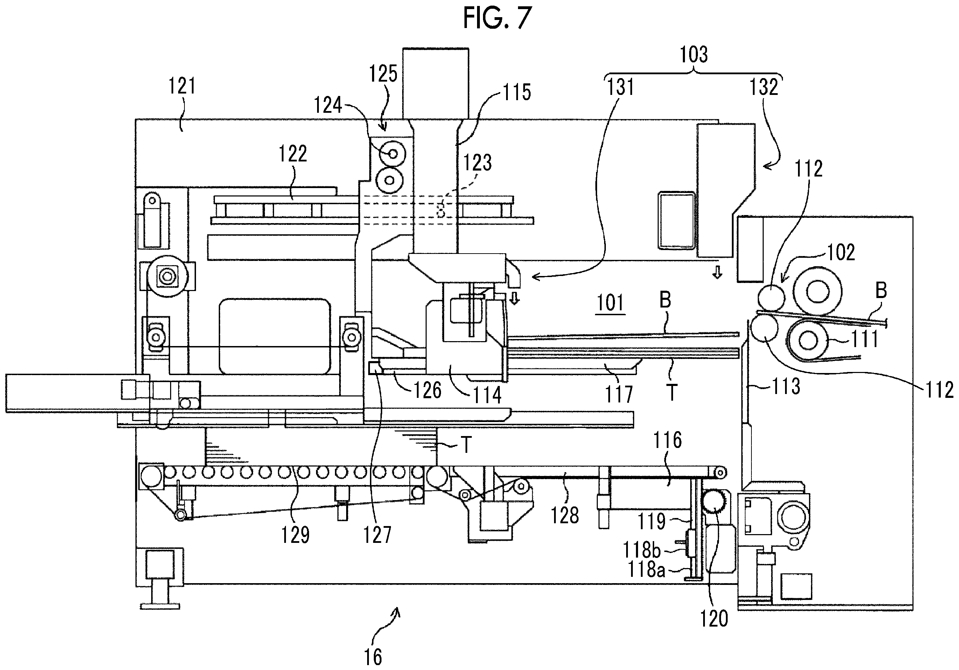

Fig. 7 is a schematic diagram illustrating the counter ejector unit.

The counter ejector unit 16 includes a hopper unit 101, an ejection device 102, and a blowing device 103. The hopper unit 101 piles the corrugated cardboard boxes B having a flat shape. The ejection device 102 continuously ejects the corrugated cardboard box B to the hopper unit 101. The blowing device 103 blows the corrugated cardboard box B transferred on the hopper unit 101 from the upper side.

An outlet portion conveyor roller 111 of the folding unit 15 (refer to Fig. 1) and a pair of upper and lower ejection rolls 112 constituting the ejection device 102 are provided in an inlet portion of the counter ejector unit 16. A spanker (correction plate) 113 that presses a rear end portion of a stack T is provided below the ejection device 102 in the counter ejector unit 16. The hopper unit 101 has a space for forming the stack T by piling the corrugated cardboard boxes B. The ejection device 102 ejects the corrugated cardboard box B toward a space above the hopper unit 101.

The hopper unit 101 is provided with a flexible front stopper 114 on the downstream side in the transfer direction of the corrugated cardboard box B. The front stopper 114 causes the corrugated cardboard box B ejected by the ejection device 102 to stop while decelerating the corrugated cardboard box B. An elevator 116 is provided below the hopper unit 101. The stack T that has been piled so far is passed to the elevator 116 from a ledge 117. The corrugated cardboard boxes B that hit the front stopper 114 to fall are received on the stack T and are piled to form the stack T of a predetermined number of sheets. The elevator 116 is horizontally disposed below the downstream side of the ejection device 102 in the transfer direction and is supported by a supporting shaft 119 provided in a rack 118a. The elevator 116 is configured to reciprocate in an up-down direction via a drive mechanism consisting of the rack 118a, a pinion 118b that meshes with the rack 118a, and a drive motor 120 joined to the pinion 118b.

A side frame 121 is provided on each of both sides in a machine width direction on the downstream side of the hopper unit 101 in the transfer direction of the corrugated cardboard box B in the counter ejector unit 16. The side frames 121 are provided with horizontal rails 122, and a ledge support 115 is supported to be runnable by the rails 122 on both sides. That is, the ledge support 115 can be moved forward and rearward in the transfer direction by a ledge forward and rearward moving mechanism consisting of a roller 123 that runs on the rails 122, a pinion, not illustrated, that meshes with a rack, not illustrated, provided along the rails 122, and a drive motor 124 that rotationally drives the pinion.

The ledge 117 that horizontally extends through a lifting mechanism including a drive motor 125 is provided in the ledge support 115. While illustration is not provided, the lifting mechanism is configured with a rack and pinion mechanism and the drive motor 125 that rotationally drives the pinion. Thus, the ledge support 115 can be lifted by normal and reverse rotation of the drive motor 125.

The ledge 117 receives the corrugated cardboard box B that has abutted against the front stopper 114 to fall and piles the corrugated cardboard boxes B to form the stack T. The ledge 117 passes the corrugated cardboard boxes B to the elevator 116 in the middle of forming the stack T, and the corrugated cardboard boxes B are piled on the elevator 116. In a case where the stack T reaches a set number of sheets, the ledge 117 operates again to receive the corrugated cardboard boxes B in order to form the next stack T for the elevator 116.

In the ledge 117, a press bar 126 that presses the stack T is supported to be liftable by a lifting mechanism including a drive motor 127. The lifting mechanism is also configured with a rack and pinion mechanism and the drive motor 127 that rotationally drives the pinion. Thus, the press bar 126 can be lifted by normal and reverse rotation of the drive motor 127.

A lower conveyor 128 is provided at the same height as an upper surface of the elevator 116 in a case where the elevator 116 is lowered as low as possible. Furthermore, a discharge conveyor 129 is provided at a position of the same height as the lower conveyor 128 on the downstream side of the lower conveyor 128.

The blowing device 103 that blows air to the corrugated cardboard box B ejected from the ejection device 102 is provided around the hopper unit 101. The blowing device 103 includes a first blowing device 131 and a second blowing device 132.

### <Remote Monitoring System>

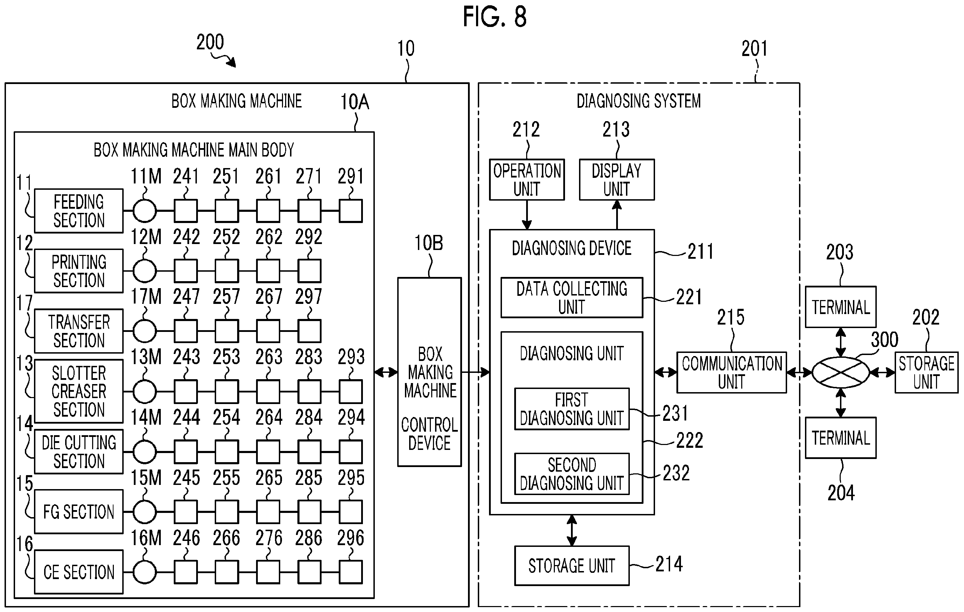

Fig. 8 is a schematic diagram illustrating a remote monitoring system including a diagnosing system for the box making machine of the present embodiment.

As illustrated in Fig. 8, a remote monitoring system 200 includes the box making machine 10, a diagnosing system 201, a storage unit 202, and a plurality of terminals (terminal devices) 203, 204, .... In the remote monitoring system 200, the box making machine 10 and the diagnosing system 201 are connected to each other in a wired or wireless manner, and the diagnosing system 201, the storage unit 202, and the plurality of terminals (terminal devices) 203, 204, ... are connected to each other through a network 300. The network 300 is a communication network such as the Internet and may be a wired network or a wireless network.

### <Box Making Machine>

The box making machine 10 includes a box making machine main body 10A and a box making machine control device 10B. The box making machine main body 10A includes the feeding unit 11, the printing unit 12, the slotter creaser unit 13, the die cutting unit 14, the folding unit 15, the counter ejector unit 16, and the transfer unit 17. The box making machine control device 10B can control the feeding unit 11, the printing unit 12, the slotter creaser unit 13, the die cutting unit 14, the folding unit 15, the counter ejector unit 16, and the transfer unit 17.

The feeding unit 11 includes the plurality of drive motors 45, 47, 48a and 48b as a feeding unit drive motor 11M. The printing unit 12 includes the plurality of drive motors 56 and 57 as a printing unit drive motor 12M. The slotter creaser unit 13 includes the plurality of drive motors 68 and 69 as a slotter creaser unit drive motor 13M. The die cutting unit 14 includes the plurality of drive motors 77 and 78 as a die cutting unit drive motor 14M. The folding unit 15 includes the plurality of drive motors 92, 93, 94, 95, 96, 97, 98, and 99 as a folding unit drive motor 15M. The counter ejector unit 16 includes the plurality of drive motors 120, 124, 125, and 127 as a counter ejector unit drive motor 16M. The transfer unit 17 includes the drive motor 60 as a transfer unit drive motor 17M.

Here, the feeding unit drive motor 11M, the printing unit drive motor 12M, the slotter creaser unit drive motor 13M, the die cutting unit drive motor 14M, the folding unit drive motor 15M, and the transfer unit drive motor 17M are inverter motors that function as a first drive device. In addition, the counter ejector unit drive motor 16M is a servomotor that functions as a second drive device. A motor that functions as the first drive device is not limited to an inverter motor and may be a servomotor, a general-purpose motor, or other motors, and these motors may be appropriately combined with each other. In addition, a motor that functions as the second drive device is not limited to a servomotor and may be an inverter motor or other motors, and these motors may be appropriately combined with each other. The first drive device drives an apparatus that transfers the corrugated board S as a sheet and the corrugated cardboard box B. Meanwhile, the second drive device is a drive device other than the first drive device.

Specifically, the first drive device is disposed on the upstream side in the transfer direction D of the corrugated board S and the corrugated cardboard box B, and the second drive device is mainly disposed on the downstream side of the first drive device in the transfer direction D. The first drive device is an inverter motor that drives an apparatus which transfers the corrugated board S and the corrugated cardboard box B along the horizontal direction. The second drive device is a servomotor that drives an apparatus which transfers the corrugated board S and the corrugated cardboard box B along the horizontal direction or a vertical direction. For example, the second drive device is a servomotor that drives the support or a shaft of the moving mechanism for aligning the corrugated cardboard boxes (box objects) transferred to the counter ejector unit 16 in the counter ejector unit 16. A motor capacity (for example, 1.5 kw to 3.5 kw) of the second drive device is smaller than a motor capacity (for example, 3.7 kw to 30.0 kw) of the first drive device.

The second drive device includes a drive motor that adjusts a position of an apparatus which supports the corrugated board S and the corrugated cardboard box B. The second drive device is a servomotor and a general-purpose motor (direct on line motor) and includes a head lateral moving motor in the slotter creaser unit 13. The second drive device includes a drive motor that adjusts a gap amount between the creasing roll main bodies 61a and the impression rolls 61b of the first creasing roll 61 and a drive motor that adjusts a gap amount between the creasing roll main bodies 62a and the impression rolls 62b of the second creasing roll 62 in the slotter creaser unit 13. Here, the general-purpose motor is a motor from which motive power is obtained by simply connecting a capacitor to supply power from a commercial power supply. The general-purpose motor is suitable for continuous operation at a constant speed. For example, the general-purpose motor is used for rotation of the rollers and motive power of the blower. A capacitor may not be connected to the general-purpose motor. In addition, the second drive device includes a drive motor that adjusts a gap amount between the upper slotter heads 64a and the lower slotter heads 64b of the first slotter heads 64. The second drive device includes a drive motor that adjusts a gap amount between the upper slotter heads 65a and the lower slotter heads 65b of the second slotter heads 65.

In addition, the die cutting unit 14 includes an ejection band drive motor and a cylinder lateral moving motor. In addition, the folding unit 15 includes left and right frame moving motors on an entry side, left and right frame moving motors on an exit side, and left and right folding bar lateral moving motors. In addition, the counter ejector unit 16 includes a squaring drive motor.

A torque sensor 241, a temperature sensor 251, a vibration sensor 261, an AE sensor 271, and a position sensor 291 are connected to the feeding unit drive motor 11M. A torque sensor 242, a temperature sensor 252, a vibration sensor 262, and a position sensor 292 are connected to the printing unit drive motor 12M. A torque sensor 243, a temperature sensor 253, a vibration sensor 263, a current sensor 283, and a position sensor 293 are connected to the slotter creaser unit drive motor 13M. A torque sensor 244, a temperature sensor 254, a vibration sensor 264, a current sensor 284, and a position sensor 294 are connected to the die cutting unit drive motor 14M. A torque sensor 245, a temperature sensor 255, a vibration sensor 265, a current sensor 285, and a position sensor 295 are connected to the folding unit drive motor 15M. A torque sensor 246, a vibration sensor 266, an AE sensor 276, a current sensor 286, and a position sensor 296 are connected to the counter ejector unit drive motor 16M. A torque sensor 247, a temperature sensor 257, a vibration sensor 267, and a position sensor 297 are connected to the transfer unit drive motor 17M.

Drive torque of the drive motors 11M, 12M, 13M, 14M, 15M, 16M, and 17M detected by the torque sensors 241, 242, 243, 244, 245, 246, and 247 is input into the box making machine control device 10B. Temperatures of the drive motors 11M, 12M, 13M, 14M, 15M, and 17M detected by the temperature sensors 251, 252, 253, 254, 255, and 257 are input into the box making machine control device 10B. Vibration (amplitudes) of the drive motors 11M, 12M, 13M, 14M, 15M, 16M, and 17M detected by the vibration sensors 261, 262, 263, 264, 265, 266, and 267 is input into the box making machine control device 10B. Vibration energy of the drive motors 11M and 16M detected by the AE sensors 271 and 276 is input into the box making machine control device 10B. Current values of the drive motors 13M, 14M, 15M, and 16M detected by the current sensors 283, 284, 285, and 286 are input into the box making machine control device 10B. Rotation positions (rotation angles) of the drive motors 11M, 12M, 13M, 14M, 15M, 16M, and 17M during one rotation are input into the box making machine control device 10B as movement positions of the drive motors 11M, 12M, 13M, 14M, 15M, 16M, and 17M detected by the position sensors 291, 292, 293, 294, 295, 296, and 297. The position sensors 291, 292, 293, 294, 295, 296, and 297 are encoders incorporated in the drive motors 11M, 12M, 13M, 14M, 15M, 16M, and 17M or potentiometers provided outside the drive motors 11M, 12M, 13M, 14M, 15M, 16M, and 17M.

Not only operation data of the drive motors 11M, 12M, 13M, 14M, 15M, 16M, and 17M but also operation data (current value) of the drive motor which adjusts the position of the apparatus which supports the corrugated board S and the corrugated cardboard box B is input into the box making machine control device 10B. In addition, operation data (vibration and a current value) of the drive motor which drives the blower for suction of the corrugated board S and the corrugated cardboard box B in the feeding unit 11, the printing unit 12, the folding unit 15, the counter ejector unit 16, and the transfer unit 17 is input into the box making machine control device 10B.

### <Diagnosing System>

The diagnosing system 201 includes a diagnosing device 211, an operation unit 212, a display unit 213, a storage unit 214, and a communication unit 215. The diagnosing system 201 is connected to the box making machine control device 10B.

The diagnosing device 211 diagnoses the feeding unit 11, the printing unit 12, the slotter creaser unit 13, the die cutting unit 14, the folding unit 15, the counter ejector unit 16, and the transfer unit 17 to find an abnormality such as a malfunction by analyzing operation data of the feeding unit 11, the printing unit 12, the slotter creaser unit 13, the die cutting unit 14, the folding unit 15, the counter ejector unit 16, and the transfer unit 17 in the box making machine 10.

The diagnosing device 211 is a control device. The control device as the diagnosing device 211 is a controller and is implemented by executing various programs stored in the storage unit 214 via, for example, a central processing unit (CPU) or a micro processing unit (MPU) using a RAM as a work region.

The operation unit 212 can be operated by a worker to input various types of data into the diagnosing device 211. The operation unit 212 is, for example, a keyboard or a touch-type display. The display unit 213 can display processing content of the diagnosing device 211. The display unit 213 is, for example, a monitor. The storage unit 214 stores various programs executed by the diagnosing device 211. The various programs also include a program for performing diagnosis by analyzing the operation data of the feeding unit 11, the printing unit 12, the slotter creaser unit 13, the die cutting unit 14, the folding unit 15, the counter ejector unit 16, and the transfer unit 17. In addition, the storage unit 214 stores a diagnosis result and the like of diagnosis performed by the diagnosing device 211.

The communication unit 215 can transmit and receive data such as the diagnosis result of diagnosis performed by the diagnosing device 211. That is, the communication unit 215 can transmit data such as the diagnosis result of diagnosis performed by the diagnosing device 211 to the storage unit 202 and can also receive various types of data stored in the storage unit 202 through the network 300.

The diagnosing device 211 includes a data collecting unit 221 and a diagnosing unit 222. The diagnosing unit 222 includes a first diagnosing unit 231 and a second diagnosing unit 232.

The data collecting unit 221 acquires the operation data of the feeding unit 11, the printing unit 12, the slotter creaser unit 13, the die cutting unit 14, the folding unit 15, the counter ejector unit 16, and the transfer unit 17 output from the box making machine control device 10B. The operation data of the feeding unit 11, the printing unit 12, the slotter creaser unit 13, the die cutting unit 14, the folding unit 15, the counter ejector unit 16, and the transfer unit 17 is the operation data of the feeding unit drive motor 11M, the printing unit drive motor 12M, the slotter creaser unit drive motor 13M, the die cutting unit drive motor 14M, the folding unit drive motor 15M, the counter ejector unit drive motor 16M, and the transfer unit drive motor 17M.

Specifically, the operation data of the drive motors 11M, 12M, 13M, 14M, 15M, 16M, and 17M is detection values of the torque sensors 241, 242, 243, 244, 245, 246, and 247, detection values of the temperature sensors 251, 252, 253, 254, 255, and 257, detection values of the vibration sensors 261, 262, 263, 264, 265, 266, and 267, detection values of the AE sensors 271 and 276, detection values of the current sensors 283, 284, 285, and 286, and detection values of the position sensors 291, 292, 293, 294, 295, 296, and 297.

The operation data of the drive motors 11M, 12M, 13M, 14M, 15M, 16M, and 17M is parameters (digital data and analog data) of the feeding unit 11, the printing unit 12, the slotter creaser unit 13, the die cutting unit 14, the folding unit 15, the counter ejector unit 16, and the transfer unit 17 that change over time. The operation data of the drive motors 11M, 12M, 13M, 14M, 15M, 16M, and 17M collected by the data collecting unit 221 is stored in, for example, the storage unit 214.

In addition, the data collecting unit 221 acquires the operation data (current value) of the drive motor which adjusts the position of the apparatus output from the box making machine control device 10B. Furthermore, the box making machine control device 10B acquires the operation data (vibration and a current value) of the drive motor which drives the blower for suction of the corrugated board S and the corrugated cardboard box B.

The diagnosing unit 222 detects the abnormality based on the operation data of the drive motors 11M, 12M, 13M, 14M, 15M, 16M, and 17M collected by the data collecting unit. The diagnosing unit 222 compares the torque, the temperatures, the vibration, the movement energy, and the current values of the drive motors 11M, 12M, 13M, 14M, 15M, 16M, and 17M with a reference range set in advance. The reference range can be set to any value. The diagnosing unit 222 determines that the torque, the temperatures, the vibration, the movement energy, and the current values of the drive motors 11M, 12M, 13M, 14M, 15M, 16M, and 17M are normal in a case where the torque, the temperatures, the vibration, the movement energy, and the current values are within the reference range and determines that the torque, the temperatures, the vibration, the movement energy, and the current values are abnormal in a case where the torque, the temperatures, the vibration, the movement energy, and the current values are not within the reference range.

The first diagnosing unit 231 detects the abnormality based on the operation data of the drive motors 11M, 12M, 13M, 14M, 15M, and 17M as the first drive device. The second diagnosing unit 232 detects the abnormality based on the operation data of the drive motor 16M. The data collecting unit 221 acquires the operation data by driving the drive motors 11M, 12M, 13M, 14M, 15M, 16M, and 17M in a diagnosis mode in which the box making machine 10 does not manufacture the corrugated cardboard box B. The first diagnosing unit 231 and the second diagnosing unit 232 detect the abnormality based on the operation data of the drive motors 11M, 12M, 13M, 14M, 15M, 16M, and 17M acquired in the diagnosis mode.

At this point, the data collecting unit 221 acquires the operation data by driving the drive motors 11M, 12M, 13M, 14M, 15M, and 17M and the drive motor 16M at different times, and the first diagnosing unit 231 and the second diagnosing unit 232 detect the abnormality of each of the drive motors 11M, 12M, 13M, 14M, 15M, 17M and the drive motor 16M based on the operation data of each of the drive motors 11M, 12M, 13M, 14M, 15M, 17M and the drive motor 16M driven at different times.

The first diagnosing unit 231 detects the abnormality based on the operation data in a case where the drive motors 11M, 12M, 13M, 14M, 15M, and 17M are driven in one direction (normal rotation drive). The second diagnosing unit 232 detects the abnormality based on the operation data in a case where the drive motor 16M is driven in one direction (normal rotation drive) and is driven in another direction (reverse rotation drive).

The first diagnosing unit 231 detects the abnormality based on the operation data in a case where the drive motors 11M, 12M, 13M, 14M, 15M, and 17M are driven at the same time. The second diagnosing unit 232 detects the abnormality based on the operation data in a case where the plurality of drive motors 16M are sequentially driven. The first diagnosing unit 231 is not limited to this method and may detect the abnormality based on the operation data in a case where the drive motors 11M, 12M, 13M, 14M, 15M, and 17M are individually continuously driven. The second diagnosing unit 232 may detect the abnormality based on the operation data in a case where the drive motor 16M are driven at the same time a plurality of times. In addition, the methods of acquiring the drive data via the first diagnosing unit 231 and the second diagnosing unit 232 may be appropriately combined with each other.

The drive motors 11M, 12M, 13M, 14M, 15M, and 17M as the first drive device are inverter motors, and the drive motor 16M as the second drive device is a servomotor. The motor capacity of the drive motor 16M as the second drive device is smaller than the motor capacities of the drive motors 11M, 12M, 13M, 14M, 15M, and 17M as the first drive device. Thus, in a case where the drive motors 11M, 12M, 13M, 14M, 15M, and 17M as the first drive device and the drive motor 16M as the second drive device are driven at the same time, for example, the vibration of the drive motors 11M, 12M, 13M, 14M, 15M, and 17M as the first drive device is significant, and it is difficult to detect the vibration of the drive motor 16M as the second drive device with high accuracy. That is, the vibration of the drive motors 11M, 12M, 13M, 14M, 15M, and 17M is transmitted to the drive motor 16M, and the vibration sensor 266 of the drive motor 16M performs erroneous detection.

Therefore, the diagnosing device 211 of the present embodiment executes acquisition and diagnosis of the operation data of the drive motors 11M, 12M, 13M, 14M, 15M, and 17M as the first drive device and acquisition and diagnosis of the operation data of the drive motor 16M as the second drive device at different times. Diagnosis performed by the diagnosing device 211 is not limited to this method. Acquisition (measurement) of the operation data of the drive motors 11M, 12M, 13M, 14M, 15M, and 17M as the first drive device and acquisition (measurement) of the operation data of the drive motor 16M as the second drive device may be executed at different times, and diagnosis of each operation data may be executed at the same time.

The diagnosing unit 222 detects the abnormality based on the operation data of the drive motor which adjusts the position of the apparatus. In this case, this processing is executed by the second diagnosing unit 232. Furthermore, the diagnosing unit 222 detects the abnormality based on the operation data of the drive motor which drives the blower for suction of the corrugated board S and the corrugated cardboard box B. In this case, this processing is preferably executed by the first diagnosing unit 231 but may be executed by the second diagnosing unit 232.

### <Storage Unit>

The storage unit 202 is implemented by a server device, a cloud system, or the like. The storage unit 202 can be connected to the diagnosing device 211 through the network 300. That is, the diagnosing device 211 receives data such as the operation data of the feeding unit 11, the printing unit 12, the slotter creaser unit 13, the die cutting unit 14, the folding unit 15, the counter ejector unit 16, and the transfer unit 17 collected by the data collecting unit 221 and diagnosis data of the feeding unit 11, the printing unit 12, the slotter creaser unit 13, the die cutting unit 14, the folding unit 15, the counter ejector unit 16, and the transfer unit 17 diagnosed by the diagnosing unit 222 in the storage unit 202 through the network 300, and the storage unit 202 stores the data. While illustration is not provided, the storage unit 202 includes a communication unit.

### <Terminal>

The terminals 203 and 204 can be operated by a user such as a serviceman, a manager, or a technician of a box making machine manufacturing company or a manager, a technician, or a worker of a corrugated board manufacturing company. The terminals 203 and 204 can access the storage unit 202 through the network 300 via a user operation. That is, by operating the terminals 203 and 204, the user can acquire data such as the operation data and the diagnosis data of the feeding unit 11, the printing unit 12, the slotter creaser unit 13, the die cutting unit 14, the folding unit 15, the counter ejector unit 16, and the transfer unit 17 stored in the storage unit 202.

The terminals 203 and 204 can be used by user login. That is, the terminals 203 and 204 store programs for login. In this case, by inputting an ID and a password, the user can log in to the storage unit 202 and acquire various types of data.

### <Method of Diagnosing Box Making Machine>

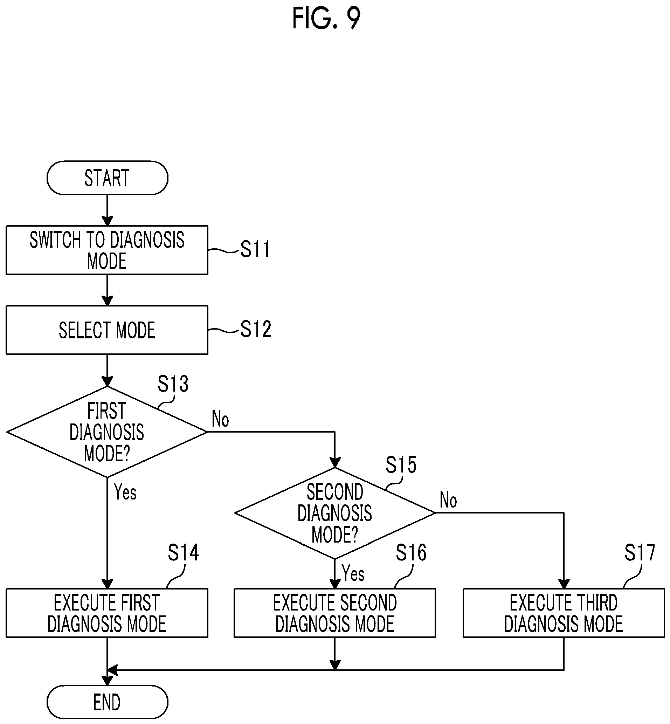

Fig. 9 is a flowchart illustrating a method of diagnosing the box making machine of the present embodiment.

The method of diagnosing a box making machine of the present embodiment includes a step of collecting the operation data of the first drive device in a case where the first drive device which drives the apparatus which transfers the sheet among a plurality of drive devices is driven, a step of detecting the abnormality based on the operation data of the first drive device, a step of collecting the operation data of the second drive device in a case where the second drive device other than the first drive device among the plurality of drive devices is driven, and a step of detecting the abnormality based on the operation data of the second drive device.

As illustrated in Fig. 9, the diagnosing system 201 of the present embodiment has a first diagnosis mode, a second diagnosis mode, and a third diagnosis mode. In the first diagnosis mode, the abnormality is detected based on the operation data in a case where the plurality of drive motors 11M, 12M, 13M, 14M, 15M, and 17M as the first drive device are driven at the same time. In the first diagnosis mode, by driving the drive motors 11M, 12M, 13M, 14M, 15M, and 17M at the same time, the abnormality can be detected by collecting the operation data in a short time period. In addition, by driving each device at the same time in the same manner as in a production operation, the operation data that reflects effects of the vibration and the like of the adjacent device and that is close to the operation data in the production operation can be collected. In this case, the drive data may be collected by driving the plurality of drive motors 11M, 12M, 13M, 14M, 15M, and 17M separately in several groups, or the operation data may be collected by selecting a diagnosis target section (the drive motors 11M, 12M, 13M, 14M, 15M, and 17M and blowers) and driving only the selected diagnosis target section.

In the second diagnosis mode, the abnormality is detected based on the operation data in a case where the plurality of drive motors 16M as the second drive device are sequentially driven. In this case, the operation data may be collected by selecting the diagnosis target section from the plurality of drive motors 16M and driving only the selected diagnosis target section. In the third diagnosis mode, the abnormality is detected based on the operation data in a case where the drive motors 11M, 12M, 13M, 14M, 15M, and 17M as the first drive device and the drive motor 16M as the second drive device are sequentially driven. That is, the third diagnosis mode is a continuous diagnosis mode in which the first diagnosis mode and the second diagnosis mode are continuously executed.

As illustrated in Fig. 8 and Fig. 9, in step S11, the worker switches the box making machine 10 from an operation mode to the diagnosis mode by operating the operation unit 212. In step S12, the worker selects any of the first diagnosis mode, the second diagnosis mode, and the third diagnosis mode by operating the operation unit 212. In step S13, the diagnosing device 211 determines whether or not the first diagnosis mode is selected. Here, in a case where the diagnosing device 211 determines that the first diagnosis mode is selected (Yes), the diagnosing device 211 executes the first diagnosis mode in step S14.

In step S13, in a case where the diagnosing device 211 determines that the first diagnosis mode is not selected (No), the diagnosing device 211 determines whether or not the second diagnosis mode is selected in step S15. Here, in a case where the diagnosing device 211 determines that the second diagnosis mode is selected (Yes), the diagnosing device 211 executes the second diagnosis mode in step S16. In step S15, in a case where the diagnosing device 211 determines that the second diagnosis mode is not selected (No), the diagnosing device 211 executes the third diagnosis mode in step S17.

### <First Diagnosis Mode>

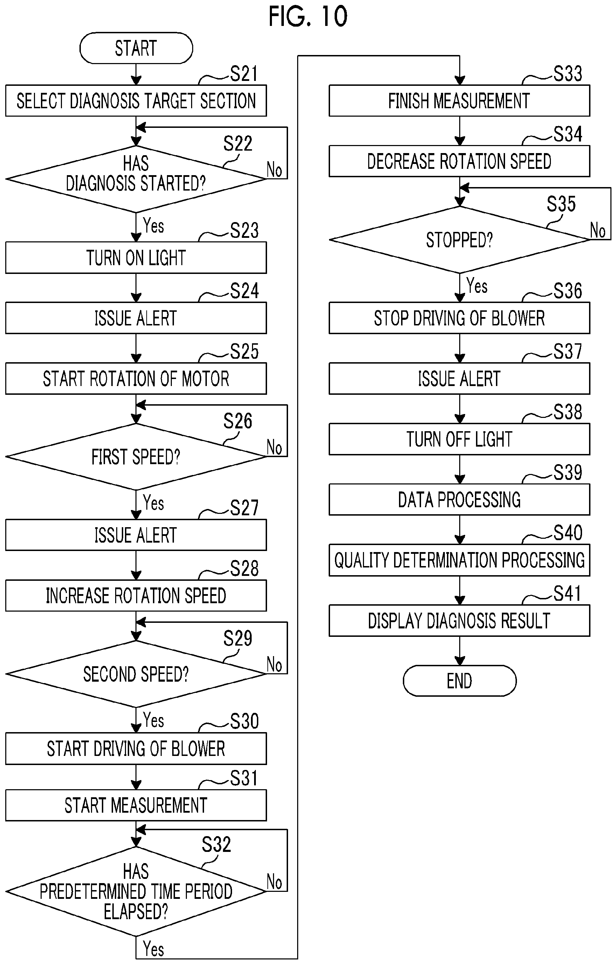

Fig. 10 is a flowchart illustrating processing in the first diagnosis mode.

As illustrated in Fig. 8 and Fig. 10, in step S21, the worker selects the diagnosis target section to be diagnosed in the first diagnosis mode by operating the operation unit 212. The diagnosis target section for the first diagnosis mode includes the drive motors 11M, 12M, 13M, 14M, 15M, and 17M of the feeding unit 11, the printing unit 12, the slotter creaser unit 13, the die cutting unit 14, the folding unit 15, and the transfer unit 17 and drive motors that drive blowers of the feeding unit 11, the printing unit 12, the folding unit 15, the counter ejector unit 16, and the transfer unit 17. The worker selects the diagnosis target section to be diagnosed in the first diagnosis mode from the drive motors 11M, 12M, 13M, 14M, 15M, and 17M and the drive motors of each blower. In a case where the worker does not select the diagnosis target section to be diagnosed in the first diagnosis mode, all of the drive motors are the diagnosis target section to be diagnosed in the first diagnosis mode.

In step S22, the diagnosing device 211 determines whether or not a start switch for the first diagnosis mode is operated. In a case where the diagnosing device 211 determines that the start switch for the first diagnosis mode is not operated (No), the diagnosing device 211 waits in this state. Meanwhile, in a case where the diagnosing device 211 determines that the start switch for the first diagnosis mode is operated (Yes), the diagnosing device 211 causes the start switch for the first diagnosis mode to blink for a predetermined time period (for example, one second) and then turns on a light of the start switch in step S23. In step S24, the diagnosing device 211 issues an alert indicating the start of the first diagnosis mode for a predetermined time period (for example, one second).

In step S25, the diagnosing device 211 starts driving rotation of the drive motors selected as the diagnosis target section for the first diagnosis mode. In the first diagnosis mode, all of the drive motors selected as the diagnosis target section are diagnosed at the same time. The drive motors selected as the diagnosis target section may be individually continuously diagnosed in the first diagnosis mode. In step S26, the diagnosing device 211 determines whether or not a rotation speed of the drive motor has reached a first speed set in advance. In a case where the diagnosing device 211 determines that the rotation speed of the drive motor has not reached the first speed (No), the diagnosing device 211 increases the rotation speed of the drive motor. In a case where the diagnosing device 211 determines that the rotation speed of the drive motor has reached the first speed (Yes), the diagnosing device 211 issues an alert indicating that the rotation speed of the drive motor is increased to the highest speed for a predetermined time period (for example, one second) in step S27. In step S28, the diagnosing device 211 further increases the rotation speed of the drive motor.

In step S29, the diagnosing device 211 determines whether or not the rotation speed of the drive motor has reached a second speed (highest speed) set in advance. In a case where the diagnosing device 211 determines that the rotation speed of the drive motor has not reached the second speed (No), the diagnosing device 211 increases the rotation speed of the drive motor. In a case where the diagnosing device 211 determines that the rotation speed of the drive motor has reached the second speed (Yes), the diagnosing device 211 starts driving rotation of the drive motor of the blower in step S30.

In step S31, the diagnosing device 211 (data collecting unit 221) starts measurement and collects the operation data in a case where each drive motor is continuously driven. In step S32, the diagnosing device 211 determines whether or not a predetermined time period as a measurement time period set in advance has elapsed from the start of measurement. In a case where the diagnosing device 211 determines that the predetermined time period has not elapsed (No), the diagnosing device 211 continues measurement. In a case where the diagnosing device 211 determines that the predetermined time period has elapsed (Yes), the diagnosing device 211 finishes measurement and stops collection of the operation data of each drive motor in step S33.

Then, in step S34, the diagnosing device 211 decreases the rotation speed of the drive motor. In step S35, the diagnosing device 211 determines whether or not the rotation speed of the drive motor has reached 0 and stopped. In a case where the diagnosing device 211 determines that the drive motor is not stopped (No), the diagnosing device 211 waits until the drive motor stops. In a case where the diagnosing device 211 determines that the drive motor has stopped (Yes), the diagnosing device 211 stops the drive motor of the blower in step S36. In step S37, the diagnosing device 211 issues an alert indicating the stoppage of all of the drive motors for a predetermined time period (for example, one second). In step S38, the diagnosing device 211 turns off the light of the start switch for the first diagnosis mode.

The diagnosing device 211 (first diagnosing unit 231) processes the acquired operation data of the drive motor in step S39 and executes determination as to quality of the operation data of the drive motor in step S40. In step S41, the diagnosing device 211 displays the diagnosis result of the drive motor on the display unit 213, stores the diagnosis result in the storage unit 214 and also stores the diagnosis result in the storage unit 202 through the network 300.

### <Second Diagnosis Mode>

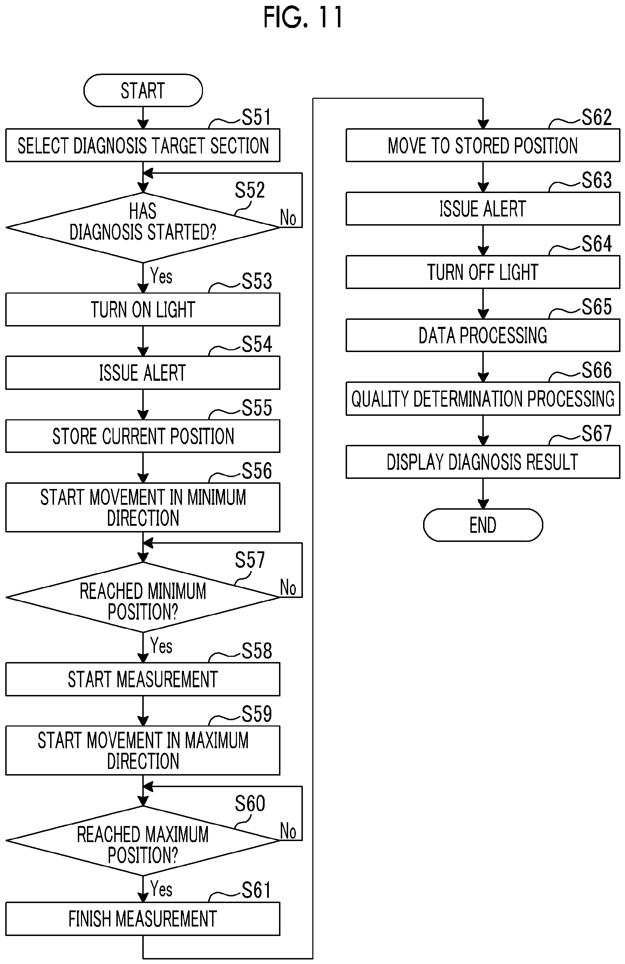

Fig. 11 is a flowchart illustrating processing in the second diagnosis mode.

As illustrated in Fig. 8 and Fig. 11, in step S51, the worker selects the diagnosis target section to be diagnosed in the second diagnosis mode by operating the operation unit 212. The diagnosis target section for the second diagnosis mode is the drive motor 16M of the counter ejector unit 16 and the drive motors which adjust the position of the apparatus in the slotter creaser unit 13, the die cutting unit 14, the folding unit 15, and the counter ejector unit 16. The worker selects the diagnosis target section to be diagnosed in the second diagnosis mode from the drive motor 16M and each adjustment drive motor. In a case where the worker does not select the diagnosis target section to be diagnosed in the second diagnosis mode, all of the drive motors are the diagnosis target section to be diagnosed in the second diagnosis mode.

In step S52, the diagnosing device 211 determines whether or not a start switch for the second diagnosis mode is operated. In a case where the diagnosing device 211 determines that the start switch for the second diagnosis mode is not operated (No), the diagnosing device 211 waits in this state. Meanwhile, in a case where the diagnosing device 211 determines that the start switch for the second diagnosis mode is operated (Yes), the diagnosing device 211 causes the start switch for the second diagnosis mode to blink for a predetermined time period (for example, one second) and then turns on a light of the start switch in step S53. In step S54, the diagnosing device 211 issues an alert indicating the start of the first diagnosis mode for a predetermined time period (for example, one second).

In step S55, the diagnosing device 211 stores the current driving rotation position of the drive motor (includes the adjustment drive motors) selected as the diagnosis target section for the second diagnosis mode. The drive motor moves the apparatus from a first position (minimum position) to a second position (maximum position), and the current driving rotation position is a driving rotation position of the drive motor in a case where the apparatus is positioned between the first position (minimum position) and the second position (maximum position). That is, the current driving rotation position is obtained by adding the rotation angle to a value obtained by multiplying the rotation speed of the drive motor by 360 degrees in a case where the apparatus moves between the first position (minimum position) and the second position (maximum position). The driving rotation position of the drive motor can be replaced with a distance in a case where the apparatus moves between the first position (minimum position) and the second position (maximum position). In step S56, the diagnosing device 211 starts driving rotation (reverse rotation) of the drive motor to the first position (minimum position) side. In the second diagnosis mode, the drive motors selected as the diagnosis target section are diagnosed at the same time. The drive motors selected as the diagnosis target section may be individually continuously diagnosed in the second diagnosis mode.

In step S57, the diagnosing device 211 determines whether or not the driving rotation position of the drive motor has reached the first position (minimum position). In a case where the diagnosing device 211 determines that the driving rotation position of the drive motor has not reached the first position (minimum position) (No), the diagnosing device 211 continues rotation of the drive motor. In a case where the diagnosing device 211 determines that the driving rotation position of the drive motor has reached the first position (minimum position) (Yes), the diagnosing device 211 (data collecting unit 221) starts measurement and collects the operation data of each drive motor in step S58.

In step S59, the diagnosing device 211 starts driving rotation (normal rotation) of the drive motor to the second position (maximum position) side. In step S60, the diagnosing device 211 determines whether or not the driving rotation position of the drive motor has reached the second position (maximum position). In a case where the diagnosing device 211 determines that the driving rotation position of the drive motor has not reached the second position (maximum position) (No), the diagnosing device 211 continues rotation of the drive motor. In a case where the diagnosing device 211 determines that the driving rotation position of the drive motor has reached the second position (maximum position) (Yes), the diagnosing device 211 (data collecting unit 221) finishes measurement and stops collection of the operation data of the drive motor in step S61.

In step S62, the diagnosing device 211 starts driving rotation (reverse rotation) of the drive motor to the stored current driving rotation position side. In a case where the driving rotation position of the drive motor reaches the stored current driving rotation position, the diagnosing device 211 stops rotation (reverse rotation) of the drive motor. Then, in step S63, the diagnosing device 211 issues an alert indicating the stoppage of all of the drive motors for a predetermined time period (for example, one second). In step S64, the diagnosing device 211 turns off the light of the start switch for the second diagnosis mode.

The diagnosing device 211 (second diagnosing unit 232) processes the acquired operation data of the drive motor in step S65 and executes determination as to quality of the operation data of the drive motor in step S66. In step S67, the diagnosing device 211 displays the diagnosis result of the drive motor on the display unit 213, stores the diagnosis result in the storage unit 214 and also stores the diagnosis result in the storage unit 202 through the network 300.

### <Third Diagnosis Mode>

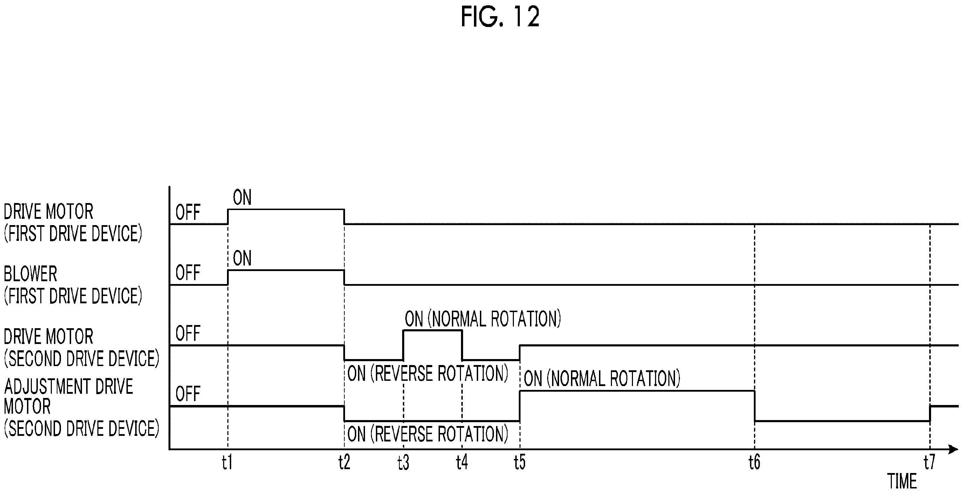

Fig. 12 is a time chart illustrating processing in the third diagnosis mode.

The third diagnosis mode is a continuous diagnosis mode in which the first diagnosis mode and the second diagnosis mode are continuously executed, and the processing in Fig. 10 and the processing in Fig. 11 are continuously executed. Thus, the third diagnosis mode will not be described in detail.

As illustrated in Fig. 8 and Fig. 12, at time t1, driving rotation of all of the drive motors as the first drive device and all of the drive motors of the blowers is started at the same time. In a case where the rotation speeds of all of the drive motors reach the highest speed, measurement is started. At this point, all of the drive motors (includes the adjustment drive motors) as the second drive device are in a stopped state. At time t2 after elapse of a predetermined time period, measurement of all of the drive motors as the first drive device is finished, and driving rotation of the drive motors is stopped.

In addition, at time t2, reverse driving rotation of all of the drive motors as the second drive device and all of the adjustment drive motors is started at the same time. At time t3, in a case where the driving rotation positions of all of the drive motors as the second drive device reach the first position (minimum position), reverse driving rotation of the drive motors is switched to normal driving rotation, and measurement is started. At time t4, in a case where the driving rotation positions of all of the drive motors as the second drive device reach the second position (maximum position), normal driving rotation of the drive motors is switched to reverse driving rotation, and measurement is finished. At time t5, in a case where the driving rotation positions of all of the drive motors as the second drive device reach the original positions, driving rotation of the drive motors is stopped.

In addition, at time t5, in a case where the driving rotation positions of all of the adjustment drive motors as the second drive device reach the first position (minimum position), reverse driving rotation of the drive motors is switched to normal driving rotation, and measurement is started. At time t6, in a case where the driving rotation positions of all of the adjustment drive motors as the second drive device reach the second position (maximum position), normal driving rotation of the adjustment drive motors is switched to reverse driving rotation, and measurement is finished. At time t7, in a case where the driving rotation positions of all of the adjustment drive motors as the second drive device reach the original positions, driving rotation of the adjustment drive motors is stopped. Such a difference between time axes results from a difference between operation time periods of diagnosis targets of the adjustment drive motors. In a case where measurement of all of the motors is finished, diagnosis is finished.

### <First Diagnosis Result>

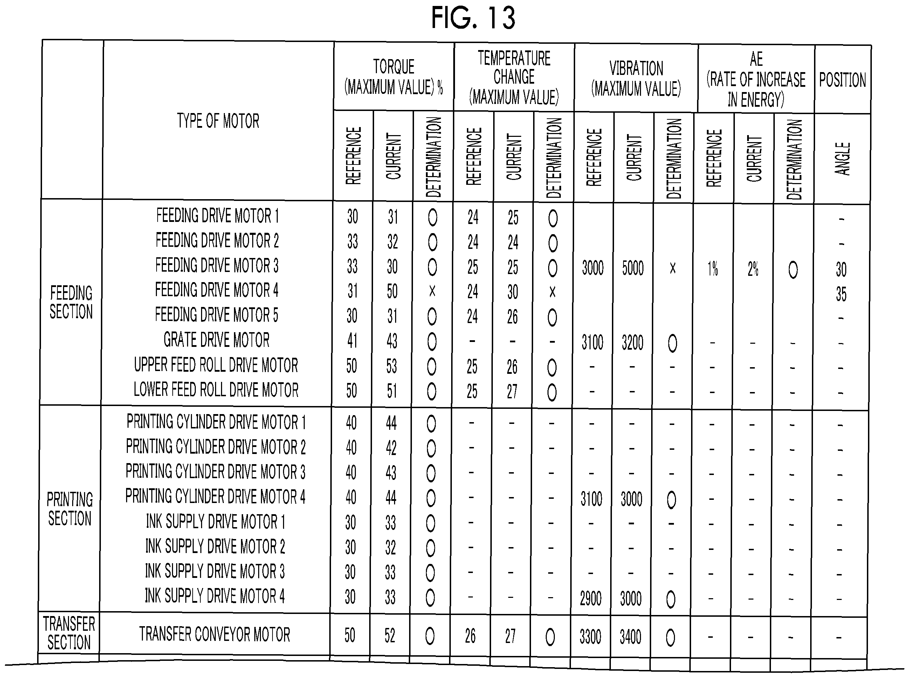

Fig. 13 is a table illustrating an example of the diagnosis result in the first diagnosis mode.

As illustrated in Fig. 8 and Fig. 13, the diagnosing unit 222 displays the diagnosis result of all of the drive motors as the first drive device on the display unit 213. As the diagnosis result to be displayed on the display unit 213 by the diagnosing unit 222, values of torque, a temperature change, vibration, AE (a rate of increase in energy), and a rotation position (angle) and a determination result with respect to types of the drive motors are displayed. The torque (maximum value) % indicates a torque level (%) of the maximum value of the torque during the measurement period with respect to rated torque of 100% of the drive motor. The temperature change (maximum value) is the maximum value (°C) of the temperature during the measurement time period. The vibration (maximum value) is the maximum value (mm/s) of the vibration during the measurement time period. The AE (the rate of increase in energy) is a rate of increase with respect to an energy value as a reference. In this case, the energy value is an integral value of a measured amplitude waveform. The position (angle) is the rotation angle of the drive motor during one rotation and indicates the number of times of movement to the position from a certain starting point. Here, feeding drive motors 1 to 5 are five drive motors 45 (refer to Fig. 2) in the feeding unit 11. The feeding drive motors 1 to 5 (drive motors 45) are provided with one vibration sensor 261 and one AE sensor 271. All of the feeding drive motors 1 to 5 may be provided with the vibration sensors 261 and the AE sensors 271.

In addition, printing cylinder drive motors 1 to 4 are four drive motors 56 (refer to Fig. 3) in the printing unit 12. Among the printing cylinder drive motors 1 to 4 (drive motors 56), only the printing cylinder drive motor 4 of the printing unit 12D is provided with the vibration sensor 261. Ink supply drive motors 1 to 4 are four drive motors 57 (refer to Fig. 3) in the printing unit 12. Among the ink supply drive motors 1 to 4 (drive motors 57), only the ink supply drive motor 4 of the printing unit 12D is provided with the vibration sensor 261. All of the printing cylinder drive motors 1 to 4 and all of the ink supply drive motors 1 to 4 may be provided with the vibration sensors 261.

In the diagnosis result of all of the drive motors as the first drive device illustrated in Fig. 13, in a case where deviations between reference values and current values of the torque, the temperature change, the vibration, and the AE as diagnosis items are smaller than or equal to determination values set in advance, a determination of normal (o) is made. In a case where the deviations exceed the determination values, a determination of abnormal (×) is made. The determination values of the torque, the temperature change, the vibration, and the AE are set in advance by experiment and the like. In addition, the rotation position (angle) of the drive device may be displayed at a location at which abnormal (×) is displayed. By recording the position (angle) of the motor when abnormal (×) occurs, for example, the angle and the like of a cylinder at a timing when abnormal (×) subsequently occurs are perceived. In addition, an abnormal location of the cylinder is perceived (for example, a location at which a gear is chipped).

### <Second Diagnosis Result>

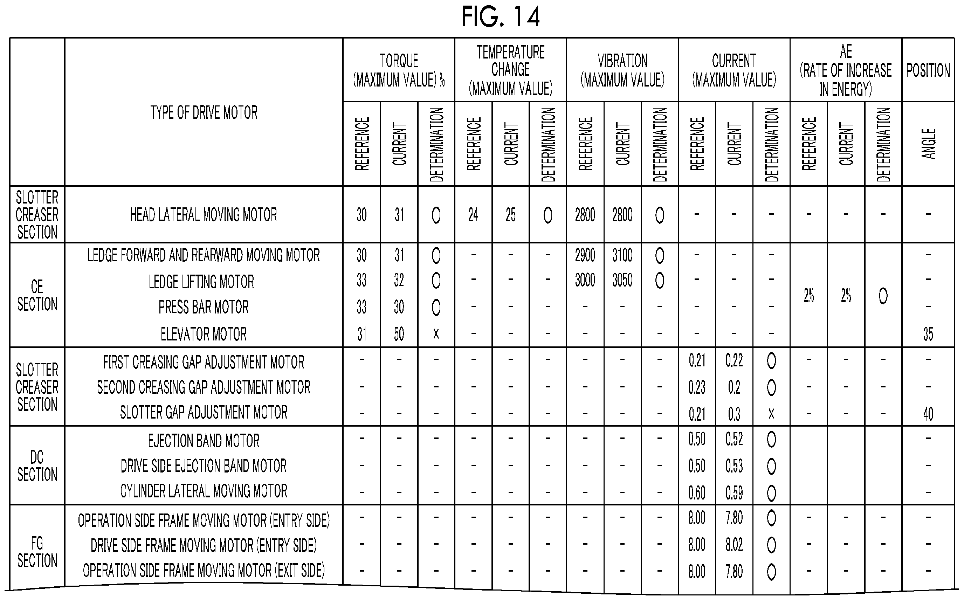

Fig. 14 is a table illustrating an example of the diagnosis result in the second diagnosis mode.

As illustrated in Fig. 8 and Fig. 14, the diagnosing unit 222 displays the diagnosis result of all of the drive motors as the second drive device and all of the adjustment drive motors on the display unit 213. As the diagnosis result to be displayed on the display unit 213 by the diagnosing unit 222, values of torque, a temperature change, vibration, a current, AE, and a rotation position and a determination result with respect to the types of the drive motors are displayed. The values of the torque, the temperature change, the vibration, the AE, and the rotation position are the same as those in Fig. 13 and thus will not be described. The current (maximum value) is the maximum value of ampere (A) during the measurement time period. The current (maximum value) may be illustrated by a ratio (%). In that case, a current level (%) of the maximum value of the current during the measurement period with respect to a rated current of 100% of the drive motor is displayed. The determination result may be illustrated by a graph or the like.

In the diagnosis result of all of the drive motors as the second drive device and all of the adjustment drive motors illustrated in Fig. 14, in a case where deviations between reference values and current values of the torque, the vibration, the current, and the AE as diagnosis items are smaller than or equal to determination values set in advance, a determination of normal (o) is made. In a case where the deviations exceed the determination values, a determination of abnormal (×) is made. The determination values of the torque, the vibration, the current, and the AE are set in advance by experiment and the like. In addition, the rotation position (angle) of the drive device may be displayed at a location at which abnormal (×) is displayed, in the same manner as that in the first diagnosis mode.

### [Effect of Action of Present Embodiment]

A production machine diagnosing system according to a first aspect includes the data collecting unit 221 that collects the operation data of the plurality of drive devices, and the diagnosing unit 222 that detects the abnormality based on the operation data of the plurality of drive devices collected by the data collecting unit 221, in which the diagnosing unit 222 includes the first diagnosing unit 231 that detects the abnormality based on the operation data of the first drive device in a case where the first drive device which drives the apparatus which transfers the sheet among the plurality of drive devices is driven, and the second diagnosing unit 232 that detects the abnormality based on the operation data of the second drive device in a case where the second drive device other than the first drive device among the plurality of drive devices is driven.

According to the production machine diagnosing system according to the first aspect, abnormality detection processing in the first drive device which drives the apparatus which transfers the sheet and abnormality detection processing in the second drive device other than the first drive device are separately performed. Thus, a case where an effect generated by the abnormality detection processing in the first drive device and an effect generated by the abnormality detection processing in the second drive device act on each other as adverse effects is suppressed. Consequently, high-accuracy diagnosis can be performed by detecting a drive state of the drive device at an optimal timing.

In the production machine diagnosing system according to a second aspect, the first diagnosing unit 231 and the second diagnosing unit 232 detect the abnormalities of the first drive device and the second drive device, respectively, based on the operation data of the first drive device and the second drive device in a case where the first drive device and the second drive device are driven at different times. Accordingly, a case where the effect generated by the abnormality detection processing in the first drive device and the effect generated by the abnormality detection processing in the second drive device act on each other as adverse effects can be suppressed.

In the production machine diagnosing system according to a third aspect, the first drive device and the second drive device are the drive motors 11M, 12M, 13M, 14M, 15M, 16M, and 17M, and the motor capacity of the second drive device is smaller than the motor capacity of the first drive device. Accordingly, a case where the effect generated by the abnormality detection processing in the first drive device acts on the effect generated by the abnormality detection processing in the second drive device as an adverse effect can be suppressed.

In the production machine diagnosing system according to a fourth aspect, the first drive device is the motor which drives the apparatus which transfers the sheet, and the second drive device is the motor which adjusts the position of the apparatus which supports the sheet. Accordingly, a case where the effect generated by the abnormality detection processing in the motor which is the first drive device acts on the effect generated by the abnormality detection processing in the motor which is the second drive device as an adverse effect can be suppressed.

In the production machine diagnosing system according to a fifth aspect, the first diagnosing unit 231 detects the abnormality based on the operation data of the first drive device in a case where the first drive device is continuously driven. Accordingly, since the first drive device does not receive an effect (for example, vibration noise) from the second drive device, diagnosis of the first drive device and diagnosis of the second drive device can be efficiently performed.

In the production machine diagnosing system according to a sixth aspect, the second diagnosing unit 232 detects the abnormality based on the operation data of the second drive device in a case where the second drive device is driven from the first position to the second position. Accordingly, since the second drive device does not receive an effect (for example, vibration) from the first drive device, diagnosis of the first drive device and diagnosis of the second drive device can be efficiently performed.

In the production machine diagnosing system according to a seventh aspect, the first diagnosing unit 231 detects the abnormality based on the operation data of a plurality of the first drive devices in a case where the plurality of first drive devices are driven at the same time, and the second diagnosing unit 232 detects the abnormality based on the operation data of a plurality of the second drive devices in a case where the plurality of second drive devices are driven at the same time. Accordingly, diagnosis of the first drive device and diagnosis of the second drive device can be efficiently performed.

In the production machine diagnosing system according to an eighth aspect, the first diagnosing unit 231 detects the abnormality based on the operation data of a plurality of the first drive devices in a case where the first drive devices are individually continuously driven, and the second diagnosing unit 232 detects the abnormality based on the operation data of a plurality of the second drive devices in a case where the second drive devices are individually continuously driven. Accordingly, diagnosis of the first drive device and diagnosis of the second drive device can be efficiently performed.

In the production machine diagnosing system according to a ninth aspect, the data collecting unit 221 collects at least any one of drive torque, a temperature, a vibration amount, AE, a current value, or a rotation position (movement position) as the operation data of the drive devices. Accordingly, diagnosis of the drive device can be appropriately performed.

A production machine diagnosing method according to a tenth aspect includes the step of collecting the operation data of the first drive device in a case where the first drive device which drives the apparatus which transfers the sheet among the plurality of drive devices is driven, the step of detecting the abnormality based on the operation data of the first drive device, the step of collecting the operation data of the second drive device in a case where the second drive device other than the first drive device among the plurality of drive devices is driven, and the step of detecting the abnormality based on the operation data of the second drive device. Accordingly, a case where the effect generated by the abnormality detection processing in the first drive device and the effect generated by the abnormality detection processing in the second drive device act on each other as adverse effects is suppressed. Consequently, high-accuracy diagnosis can be performed by detecting the drive state of the drive device at the optimal timing.

A box making machine according to an eleventh aspect includes the feeding unit 11 that feeds a carton-forming sheet material, the printing unit 12 that performs printing on the carton-forming sheet material, the slotter creaser unit 13 that performs the creasing processing and the grooving processing on a surface of the carton-forming sheet material, the folding unit 15 that forms a box object by folding the carton-forming sheet material and bonding end portions, the counter ejector unit 16 that piles the box objects while counting the number of box objects and then discharges the box objects for each predetermined number, and the diagnosing system 201. Accordingly, in the box making machine configured with multiple mechanical components and electrical components, high-accuracy diagnosis can be performed by detecting the drive state of the drive device at the optimal timing.

In the box making machine according to a twelfth aspect, the first drive device is the motor which drives the apparatus which transfers the corrugated board (carton-forming sheet material) S, and the second drive device is the motor which drives the support or the shaft of the moving mechanism for aligning the corrugated cardboard boxes B transferred to the counter ejector unit 16. Accordingly, a case where the effect generated by the abnormality detection processing in the motor which is the first drive device acts on the effect generated by the abnormality detection processing in the motor which is the second drive device as an adverse effect can be suppressed.

A remote monitoring system according to a thirteenth aspect includes the diagnosing system 201 and the terminals (terminal devices) 203 and 204 that can access the diagnosing system 201 through the network 300. Accordingly, the user of the box making machine manufacturing company or the corrugated board manufacturing company can check and share the diagnosis result of the drive device in the box making machine from any place at any time. Thus, smooth communication between the box making machine manufacturing company and the corrugated board manufacturing company can be made, and quick recovery can be made by specifying occurrence, a cause, and the like of the abnormality.

While the drive device has been described as the drive motor in the embodiment, the drive device is not limited to the drive motor and may be a hydraulic cylinder or the like.

In addition, while the box making machine 10 is applied as the production machine in the embodiment, the present disclosure can also be applied to the production machine other than the box making machine 10. As the production machine, for example, a corrugated board manufacturing device (corrugator machine), a rotary offset printer for newspapers, a commercial rotary offset printer, and an offset sheet-fed printer that transfer a liner, a medium, a web, a paper sheet, and the like as the sheet can be applied.

### Reference Signs List

10: box making machine (production machine)
10A: box making machine main body
10B: box making machine control device
11: feeding unit
11M: feeding unit drive motor
12: printing unit
12A, 12B, 12C, 12D: printing unit
12M: printing unit drive motor
13: slotter creaser unit
13M: slotter creaser unit drive motor
14: die cutting unit
14M: die cutting unit drive motor
15: folding unit
15M: folding unit drive motor
16: counter ejector unit (counter ejector)
16M: counter ejector unit drive motor
17: transfer unit
17M: transfer unit drive motor
21: transfer unit
22: feed roll
31: front guide
32: backstop
33: side guide
34: feed table
35: wheel assembly
36: suction section
37: grate device
41: suction box
42: duct
43: suction blower
44: wheel
45: drive motor (first drive device)
46: grate
47: drive motor (first drive device)
48a, 48b: drive motor (first drive device)
51: printing cylinder
52: ink supply roll
53: ink supply section
54: impression roll
55: printing die
56, 57: drive motor (first drive device)
58: guide roller
59: transfer belt
60: drive motor (first drive device)
61: first creasing roll
62: second creasing roll
63: slitter head
64: first slotter head
65: second slotter head
66, 67: slotter knife
68, 69: drive motor
71, 72: pull collar
73: anvil cylinder
74: knife cylinder
75: knife object attachment base
76: cutting knife
77, 78: drive motor
81: upper transfer belt
82: lower transfer belt
83, 84: folding rail
85, 86: gauge roller
87, 88: forming belt
89, 90: squaring bar
91: gluing device
92, 93, 94, 95, 96, 97, 98, 99: drive motor (first drive device)
101: hopper unit
102: ejection device
103: blowing device
114: front stopper
115: ledge support
116: elevator
117: ledge
120, 124, 125, 127: drive motor (second drive device)
126: press bar
128: lower conveyor
129: discharge conveyor
131: first blowing device
132: second blowing device
200: remote monitoring system
201: diagnosing system
202: storage unit
203, 204: terminal (terminal device)
211: diagnosing device
212: operation unit
213: display unit
214: storage unit
221: data collecting unit
222: diagnosing unit
231: first diagnosing unit
232: second diagnosing unit
241, 242, 243, 244, 245, 246, 247: torque sensor
251, 252, 253, 254, 255, 257: temperature sensor
261, 262, 263, 264, 265, 266, 267: vibration sensor
271, 276: AE sensor
283, 284, 285, 286: current sensor
291, 292, 293, 294, 295, 296, 297: position sensor
300: network
S: corrugated board (carton-forming sheet material)
B: corrugated cardboard box (sheet, box object)
T: stack (sheet)

## Claims

1. A production machine diagnosing system comprising:
a data collecting unit that collects operation data of a plurality of drive devices; and
a diagnosing unit that detects an abnormality based on the operation data of the plurality of drive devices collected by the data collecting unit,
wherein the diagnosing unit includes
a first diagnosing unit that detects an abnormality based on operation data of a first drive device which drives an apparatus which transfers a sheet among the plurality of drive devices in a case where the first drive device is driven, and
a second diagnosing unit that detects an abnormality based on operation data of a second drive device other than the first drive device among the plurality of drive devices in a case where the second drive device is driven.

2. The production machine diagnosing system according to Claim 1,
wherein the first diagnosing unit and the second diagnosing unit detect the abnormalities of the first drive device and the second drive device, respectively, based on the operation data of the first drive device and the second drive device in a case where the first drive device and the second drive device are driven at different times.

3. The production machine diagnosing system according to Claim 1 or 2,
wherein the first drive device and the second drive device are motors, and a motor capacity of the second drive device is smaller than a motor capacity of the first drive device.

4. The production machine diagnosing system according to any one of Claims 1 to 3,
wherein the first drive device is a motor that drives the apparatus which transfers the sheet, and the second drive device is a motor that adjusts a position of an apparatus which supports the sheet.

5. The production machine diagnosing system according to any one of Claims 1 to 4,
wherein the first diagnosing unit detects the abnormality based on the operation data of the first drive device in a case where the first drive device is continuously driven.

6. The production machine diagnosing system according to any one of Claims 1 to 5,
wherein the second diagnosing unit detects the abnormality based on the operation data of the second drive device in a case where the second drive device is driven from a first position to a second position.

7. The production machine diagnosing system according to any one of Claims 1 to 6,
wherein the first diagnosing unit detects the abnormality based on the operation data of a plurality of the first drive devices in a case where the plurality of first drive devices are driven at the same time, and
the second diagnosing unit detects the abnormality based on the operation data of a plurality of the second drive devices in a case where the plurality of second drive devices are driven at the same time.

8. The production machine diagnosing system according to any one of Claims 1 to 6,
wherein the first diagnosing unit detects the abnormality based on the operation data of a plurality of the first drive devices in a case where the first drive devices are individually continuously driven, and
the second diagnosing unit detects the abnormality based on the operation data of a plurality of the second drive devices in a case where the second drive devices are individually continuously driven.

9. The production machine diagnosing system according to any one of Claims 1 to 8,
wherein the data collecting unit collects at least any one of drive torque, a temperature, a vibration amount, AE, a current value, or a movement position as the operation data of the drive devices.

10. A production machine diagnosing method comprising:
a step of collecting operation data of a first drive device that drives an apparatus which transfers a sheet among a plurality of drive devices in a case where the first drive device is driven;
a step of detecting an abnormality based on the operation data of the first drive device;
a step of collecting operation data of a second drive device other than the first drive device among the plurality of drive devices in a case where the second drive device is driven; and
a step of detecting an abnormality based on the operation data of the second drive device.

11. A box making machine comprising:
a feeding unit that feeds a carton-forming sheet material;
a printing unit that performs printing on the carton-forming sheet material;
a slotter creaser unit that performs creasing processing and grooving processing on a surface of the carton-forming sheet material;
a folding unit that forms a box object by folding the carton-forming sheet material and bonding end portions;
a counter ejector unit that piles the box objects while counting the number of box objects and then discharges the box objects for each predetermined number; and
the production machine diagnosing system according to any one of Claims 1 to 9.

12. The box making machine according to Claim 11,
wherein the first drive device is a motor that drives an apparatus which transfers the carton-forming sheet material, and the second drive device is a motor that drives a support or a shaft of a moving mechanism for aligning the box objects transferred to the counter ejector unit.

13. A remote monitoring system comprising:
the production machine diagnosing system according to any one of Claims 1 to 9; and
a terminal device that is capable of accessing the production machine diagnosing system through a network.
